# EUROPEAN PATENT APPLICATION

(11) **EP 3 144 931 A1**
(43) Date of publication of application: **22.03.2017**
(21) Application number: 16187722.0
(22) Date of filing: 08.09.2016
(51) Int. Cl.: G10L 15/22, G10L 13/02

(54) **DIALOG MANAGEMENT APPARATUS AND METHOD**

(30) Priority: 17.09.2015 KR 20150131861
(71) Applicant: Samsung Electronics Co., Ltd., Suwon-si, Gyeonggi-do 16677 (KR)
(72) Inventor: KIM, Jung Hoe, Gyeonggi-do (KR); WOO, Kyoung-Gu, Seoul (KR); KANG, Byung Kon, Gyeonggi-do (KR); KAM, Hye Jin, Gyeonggi-do (KR)
(74) Representative: Grünecker Patent- und Rechtsanwälte PartG mbB

(57) **Abstract**

An intelligent dialog processing apparatus and method. The intelligent dialog processing apparatus includes a speech understanding processor, of one or more processors, configured to perform an understanding of an uttered primary speech of a user using an idiolect of the user based on a personalized database (DB) for the user, and an additional-query processor, of the one or more processors, configured to extract, from the primary speech, a select unit of expression that is not understood by the speech understanding processor, and to provide a clarifying query for the user that is associated with the extracted unit of expression to clarify the extracted unit of expression.

## Description

### BACKGROUND

### Field

The following description relates to an intelligent dialog management apparatus and method processing a user's utterance.

### Description of Related Art

For a general automated speech-based dialog agent, the natural language level of understanding through technological capabilities of the agent largely control the overall interactive performance of the agent. The technology behind the automated natural language understanding is a challenging one due to varying degrees of freedom exercised by speakers in their utterances, level of sensitivity to speech recognition errors, and the like. For the speech-based dialog agent, personalization may be performed in an initializing step for understanding eventual questions or commands from a speaker or by relying on a speaker's stored personal information when responding to such understood questions or commands. For example, generally, a user may be prompted by the agent to register and store phonetic transcriptions of particular words the speaker often uses. The agent may then implement a language model during recognition, e.g., during a recognition or conversion of audible language into written language, that utilizes the stored information as a dictionary when performing the speech recognition.

In such a general automated speech recognition process, only phonetic information of new words are processed, for example only an acoustic model that may be used in the recognition operation is updated. In addition, in this general speech recognition processes, due to failings in such computer technologies, when a portion of a spoken phrase is not recognized, the user must select from a displayed list of potentially corresponding words generated by the language model, e.g., as a model based on the frequency of words being used together, or the speaker is required to repeat the entire spoken phrase, and if the same portion is still not recognized the entire spoken phrase may be determined unrecognizable. Thus, speech-based intelligent dialog agents have problems and drawbacks that specifically arise in computer or processor technologies, such as spoken commands or queries not being recognized and such automated agents being inefficient, inaccurate, and even inoperable for dialog recognition.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an intelligent dialog processing apparatus includes a speech understanding processor, of one or more processors, configured to perform an understanding of an uttered primary speech of a user using an idiolect of the user based on a personalized database (DB) for the user, and an additional-query processor, of the one or more processors, configured to extract, from the primary speech, a select unit of expression that is not understood by the speech understanding processor, and to provide a clarifying query for the user that is associated with the extracted unit of expression to clarify the extracted unit of expression.

The speech understanding processor may include a reliability calculator configured to calculate a reliability of each unit of expression that makes up the primary speech, using the personalized DB, and the speech understanding processor may perform the understanding of the primary speech using the idiolect of the user based on the calculated reliability.

The providing of the clarifying query may include analyzing a context of the extracted unit of expression in the primary speech and/or the personalized DB for a potentially related term for the extracted unit of expression and generating a contextualized clarifying query based on a result of the analyzing.

The personalized DB may include at least one of the following: a common DB storing common speech expressions among multiple users; a personal DB storing various expressions in the idiolect of the user; and an ontology DB storing either or both the common speech expressions and the expressions in the idiolect of the user in an ontology form.

The reliability calculator may differently weight understanding results from at least two DBs out of the common DB, the personal DB, and the ontology DB, and then calculate the reliability using the differently weighted understanding results.

The additional-query processor may generate the clarifying query based on either or both the extracted unit of expression and a query template.

The additional-query processor may include a category determiner configured to determine a category of the extracted unit of expression, and a template extractor configured to extract the query template that corresponds to the determined category from a query template DB.

The additional-query processor may further include a voice extractor configured to extract, from audio of the primary speech, audio of the user's voice that corresponds to the extracted unit of expression, and the additional-query creator may generate the clarifying query by mixing the extracted audio of the user's voice with a generated voicing of the query template.

The additional-query processor may be further configured to interpret a clarifying speech which is received from the user in response to an outputting of the provided clarifying query to the user, and the additional-query processor may further include an answer detector configured to detect an answer related to the extracted unit of expression in the clarifying speech based on a result of the interpretation of the clarifying speech.

The additional-query processor may include an answer confirmation processor configured to make a confirmation query to the user regarding the detected answer, and an answer personalization processor configured to update the personalized DB according to a confirmation reply received from the user in response to the confirmation query.

The intelligent dialog processing apparatus may further include a speech determiner configured to determine which of primary and clarifying speeches is intended by an input utterance of the user.

One of the one or more processors may be configured to receive an utterance of the user captured by a voice inputter, to perform recognition of the received utterance, and to provide results of the recognition to the speech understanding processor to perform the understanding based on the provided results.

The intelligent dialog processing apparatus may further include a reply processor, of the one or more processors, configured to provide the clarifying query to the user in a natural language voice.

The intelligent dialog processing apparatus may further include a speech inputter configured to capture user utterances.

The one of the one or more processors, the speech understanding processor, and the additional-query processor may be a same processor.

In another general aspect, an intelligent dialog processing method includes performing an automated understanding of an uttered primary speech of a user using an idiolect of the user based on a personalized DB for the user, extracting, from the primary speech, a select unit of expression that is not understood based on the understanding, and providing a clarifying query associated, through an automated process, with the extracted unit of expression to clarify the extracted unit of expression.

The understanding of the uttered primary speech may include calculating a reliability of each unit of expression that makes up the primary speech, based on the personalized DB, and performing the understanding of the primary speech using the idiolect of the user based on the calculated reliability.

The personalized DB may include at least one of the following: a common DB storing common speech expressions among multiple users; a personal DB storing various expressions in the idiolect of the user; and an ontology DB storing either or both the common speech expressions and the expressions in the idiolect of the user in an ontology form.

The providing of the clarifying query may include generating the clarifying query, for output to the user, based on either or both the extracted unit of expression and a query template.

The providing of the clarifying query may include determining a category of the extracted unit of expression, and extracting the query template that corresponds to the determined category from a query template DB.

The providing of the clarifying query may include extracting, from audio of the primary speech, audio of the user's voice that corresponds to the extracted unit of expression, generating the clarifying query by mixing the extracted audio of the user's voice with a generated voicing of the query template, and outputting the generated clarifying query.

The providing of the clarifying query may include interpreting a clarifying speech which is received from the user in response to an outputting of the provided clarifying query to the user, and detecting an answer related to the extracted unit of expression in the clarifying speech based on a result of the interpretation of the clarifying speech.

The providing of the clarifying query may include generating a confirmation query regarding the detected answer, presenting the generated confirmation query to the user, and updating the personalized DB according to a confirmation reply received from the user in response to the confirmation query.

The intelligent dialog processing method may further include determining which of primary and clarifying speeches is intended by an input utterance of the user.

The performing of the understanding of the uttered primary speech may further include receiving the uttered primary speech from a remote terminal that captured the uttered primary speech, and the providing of the clarifying query may further include providing the clarifying query to the remote terminal to output the clarifying query to the user.

The received uttered primary speech may be in a text form as having been recognized by a recognizer processor of the remote terminal using at least one of an acoustic model and a language model to recognize the captured uttered primary speech.

The intelligent dialog processing method may further include receiving an utterance of the user captured by a voice inputter, performing recognition on the received utterance, where the performing of the understanding includes performing the understanding using results of the recognition, and outputting the clarifying query to the user, as a reply to the utterance, in a natural language voice.

In another general aspect, a non-transitory computer-readable storage medium stores instructions that, when executed by a processor, cause the processor to perform any or any combination of methods or operations described herein.

In another general aspect, an intelligent dialog processing system includes a speech recognizer processor, of one or more processors, configured to receive an initial utterance of a statement by the user, and to perform a recognition of the received initial utterance, an utterance processor, of the one or more processors, configured to perform an understanding of the recognized initial utterance using an idiolect of the user based on results of the recognition and a personalized DB of the user, process a clarifying query associated with a unit of expression that is not understood in the understanding of the recognized initial utterance, and to output the clarifying query, and a reply processor, of the one or more processors, configured to generate a natural language reply to the received initial utterance of the user using the clarifying query for clarify a portion of the initial utterance to the utterance processor.

The speech recognizer processor may recognize the received initial utterance using either or both an acoustic model and a language model, and provides the results of the recognition to the utterance processor in a text form.

The utterance processor may determine a category of the unit of expression, and generate the clarifying query by combining the unit of expression and a query template that corresponds to the determined category.

The utterance processor may extract, from audio of the initial utterance, audio of the user's voice that corresponds to the unit of expression, and generate the clarifying query by mixing the extracted audio of the user's voice with a generated voicing of the query template.

When a clarifying speech is received in response to the clarifying query, the utterance processor may detect an answer related to the unit of expression from the clarifying speech and provide a final result of an understanding of the initial utterance based on both the detected answer and the performed understanding of the initial utterance.

The reply processor may extract a reply candidate from the personalized DB based on results of the understanding of the initial utterance, generate a natural language question using the extracted reply candidate, convert the generated question into a natural language voice, and provide the natural language voice for output to the user.

In another general aspect, an intelligent dialog processing apparatus includes a processor configured to perform a first understanding of an uttered primary speech of a user using an idiolect of the user based on a personalized DB for the user, extract, from the primary speech, a select unit of expression that is not understood in the first understanding, provide a clarifying query associated with the extracted unit of expression to clarify the extracted unit of expression, perform a second understanding of an uttered clarifying speech of the user, uttered in response to the clarifying query, to clarify the extracted unit of expression, and update the personalized DB based on the second understanding for understanding a subsequent primary speech that includes the extracted unit of expression automatically without clarification.

The processor may be further configured to control the intelligent dialog processing apparatus to perform an additional operation based on a combination of results of the first understanding and results of the second understanding.

The processor may be further configured to perform a recognition operation of the uttered primary speech using at least one of an acoustic model or language model, wherein the first understanding of the uttered primary speech may include searching the personalized DB for the results of the recognition operation of the uttered primary speech.

The second understanding may include comparing the clarifying query to recognized contents of the uttered clarifying speech and, based on results of the comparing, searching the personalized DB for the recognized contents of the uttered clarifying speech.

The intelligent dialog processing apparatus may be a smartphone or personal assistant agent device and may include a memory configured to store instructions, where the processor is further configured to execute the instructions to configure the processor to perform the first understanding, extract the select unit of expression, provide the clarifying query, perform the second understanding, and update of the personalized DB.

Other features and aspects will be apparent from the following detailed description, the drawings, and the claims.

### BRIEF DESCRIPTION OF THE DRAWINGS

FIG. 1 illustrates an utterance processing apparatus according to one or more embodiments.
FIG. 2 is a block diagram illustrating a speech understanding processor according to one or more embodiments.
FIGS. 3A to 3C are block diagrams illustrating examples of additional-query processors according to differing embodiments.
FIGS. 4A and 4B are block diagrams illustrating examples additional-query processors according to differing embodiments.
FIG. 5 is a flowchart illustrating an utterance processing method according to one or more embodiments.
FIG. 6 is a flowchart illustrating an utterance processing method according to one or more embodiments.
FIG. 7 is a flowchart illustrating an example of a generating of an additional query according to one or more embodiments.
FIG. 8 is a flowchart illustrating an example of a generating of an additional query according to one or more embodiments.
FIG. 9 is a flowchart illustrating an example of a processing of an additional speech according to one or more embodiments.
FIG. 10 is a block diagram illustrating a dialog management apparatus according to one or more embodiments.
FIG. 11 is a block diagram illustrating an agent terminal according to one or more embodiments.
FIG. 12 is a block diagram illustrating a dialog management system according to one or more embodiments.

Throughout the drawings and the detailed description, unless otherwise described, the same drawing reference numerals will be understood to refer to the same or like elements, features, and structures. The relative size and depiction of these elements may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

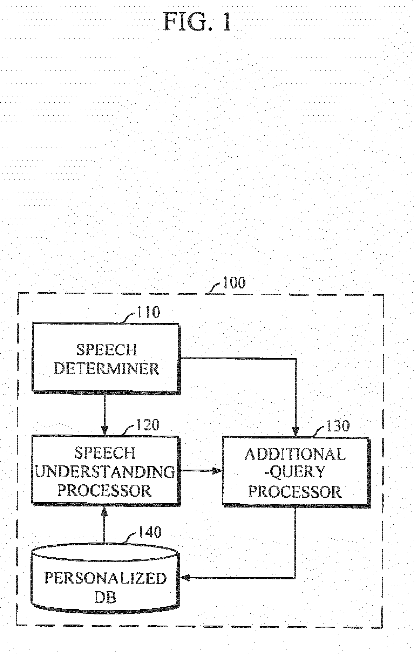

FIG. 1 illustrates an utterance processing apparatus according to one or more embodiments.

An utterance processing apparatus 100 according to one or more embodiments may be, or included therein, any electronic device, such as a smartphone, a tablet PC, a desktop PC, a laptop PC, a healthcare device, an intelligent robot, a smart home personal assistant, and a wearable device, as only examples, which may employ an automated voice agent, e.g., a speech-based voice agent. The utterance processing apparatus 100 is hardware and may be implemented by one or more processing devices, such as one or more processors, computers, or other processing hardware. The electronic device may include further hardware elements further supporting additional operations and capabilities of the electronic devices, such as discussed further below. In addition, herein, intelligent dialog agents (or just "agents") may refer to computer or processing device hardware that perform recognition and/or understanding operations of audio information, such as in an intelligent dialog interaction between a user and the agent.

Referring to FIG. 1, the utterance processing apparatus 100 may include a speech determiner 110, a speech understanding processor 120, an additional-query processor 130, and a personalized database (DB) 140, for example. Here, any or any combination of the speech determiner 110, speech understanding processor 120, additional-query processor 130, and personalized DB 140 may be one or more processors or other hardware processing devices. In addition, in another embodiment, any or any combination of the speech determiner 110, speech understanding processor 120, additional-query processor 130, and personalized DB 140 may be implemented by such one or more processors that are caused to implement operations for the same in accordance with instructions stored on a non-transitory readable medium, such as a memory of the utterance processing apparatus 100. The personalized DB 140 may also be personalized information stored in two or more different databases. For example, the personalized DB 140 may be representative of the memory, with one portion including the personalized DB 140 and another portion including such instructions, or the personalized DB 140 may further be representative of another memory in addition to any memory of the utterance processing apparatus 100 that may store such instructions.

When a user's utterance is received or input, the speech determiner 110 may determine whether the user's utterance is a "primary speech," e.g., a command, a request, or a response to a previous initial query by the utterance processing apparatus 100, or whether the user's utterance is an "additional speech" which is a response to an "additional query" made by the utterance processing apparatus 100 to the user regarding such a primary speech. The user's utterance may be related to a command used to execute various functions, such as creating and sending text, dialing, running a web browser, managing contacts, or running applications by the utterance processing apparatus 100. For example, a primary speech could be such a command or the primary speech could be some request that is not in response to a query by the utterance processing apparatus 100, or the primary speech could be a command, request, or answer to a question from the utterance processing apparatus 100 that is other than for clarifying a previous user's primary speech. For example, the primary speech response could be an answer to a question by the utterance processing apparatus 100 of whether there are any appointments that should be added to the user's calendar, for example, or the question could be a follow-up to a previous command by the user, such inquiring whether the user desired to set an alarm for the appointment. However, if a portion of a primary speech is either not understood by the utterance processing apparatus 100, or there is a determined sufficiently high likelihood that such primary speech could be or has been misunderstood, the utterance processing apparatus 100 may provide a determined pertinent select additional query to the user about that portion of the primary speech. The user's response to that additional query would be an additional speech. The additional query may be different from merely a request that the user repeat the entire primary speech, or a request that the user rephrase the entire primary speech, but rather, the additional query may be determined to be particularly relevant or pertinent to a relevant portion of the primary speech and may attempt to elucidate information about a portion of the primary speech that is not understood or desirably needs to be clarified.

As only an example, to differentiate between primary speech and additional speech, the speech determiner 110 may determine that a user's utterance is 'additional speech' when the utterance has been received within a predetermined length of time (e.g., 5 seconds) after an additional query was made to the user. Also, the speech determiner 110 may determine an utterance is a primary speech when the user's utterance is received before an additional query, e.g., with regard to a previous primary speech, has been made but after an activation of the voice agent, i.e., the utterance processing apparatus 100, has been made to generate the additional query, or when the user's utterance is received after the example predetermined length of time has passed since an additional query was made. Thus, in these examples, such a predetermined length of time may be used to determine whether the user's utterance is a primary speech or additional speech. The predetermined length of time may be appropriately set and adjusted. Different factors may be taken into consideration in adjusting such a predetermined length, and there may be different predetermined lengths for different situations, contexts, conversations, or environments, as only examples.

In another example, the speech determiner 110 may receive a result of speech recognition of the user's utterance within a predetermined length of time after the additional query is made, analyze the speech recognition result, and determine that the user's utterance is an additional speech if, having analyzed the speech recognition result, in an understanding operation a keyword related to the additional query is detected. For example, if an additional query was "Who is Director Smith?" and the user's subsequent user utterance is "Director Smith is John Smith", the speech determiner 110 may determine that the user's utterance is an additional speech because the phrase, "Director Smith", which was in the additional query, is detected in the user's utterance. If the user's utterance does not include such a keyword, or is otherwise determined to not correspond to the additional query, the speech determiner 110 may determine that the user's utterance is a primary speech.

However, embodiments for determining whether the user's utterances are primary or additional speeches are not limited to the above examples, and various additional and/or alternative embodiments are available.

When the speech determiner 110 determines that the user's utterance is a primary speech, the speech understanding processor 120 interprets the primary speech with reference to the personalized DB 140, e.g., by analyzing a textual translation of the primary speech, and performs an understanding of the primary speech in accordance with the user's idiolect based on the personalized DB 140. In this case, if a specific unit of expression, of multiple units of expression that make up the primary speech, is not found in the personalized DB 140, the speech understanding processor 120 may determine that such understanding of the specific unit of expression fails, and thus that understanding of the entirety of primary speech in the user's idiolect has failed. The speech understanding processor 120 may accordingly determine that an additional query with regard to the specific unit of expression in the user's utterance is needed or desired.

When the speech understanding processor 120 determines that an additional query is required or desired, the additional-query processor 130 extracts from the user's primary speech the unit of expression that has failed to be understood with respect to the user's own idiolect, and performs processing of an appropriate additional query associated with the extracted expression.

For example, if a user's utterance "Call Director Smith" is input, the speech understanding processor 120 determines that "Director Smith" is actually "John Smith" based on the personalized DB 140 and then understands the user's primary speech as "Call John Smith." For example, in using the personalized DB 140, the speech understanding processor 120 may generate a query in an appropriate format of the personalized DB 140 for "Smith", for example, and the personalized DB 140 may return to the speech understanding processor 120 the result "John Smith." However, if the speech understanding processor 120 fails to determine who "Director Smith" is, e.g., as "Smith" or "Director Smith" is not present in the personalized DB 140, the speech understanding processor 120 may determine that an additional query regarding "Director Smith" is needed or desirable.

At this time, from the user's primary speech that includes of the units of expression "Call" and "Director Smith," the additional-query processor 130 may extract "Director Smith" as the unit of expression for which an additional query is required or desirable since said expression would not, or may not fully, be understood. The additional-query processor 130 generates an additional query based on the extracted "Director Smith" unit of expression, and transmits or audibly outputs the generated query to the user. The additional-query processor 130 may generate the additional query further based on the understood units of expression, e.g., so the generated additional-query is more pertinent to the non-understood unit of expression.

In addition, when the user then provides or inputs an additional utterance in response to the additional query, the additional-query processor 130 processes the input additional utterance and may then understand the unit of expression from the primary speech that could not be understood before, and then processes personalization of speech recognition by updating the processing result of the additional query to the personalized DB 140 so that the result of the additional query can be utilized in future dialog with said user, e.g., so when the user next refers to "Director Smith" the speech understanding processor 120 may understand this unit of expression. In addition, the speech understanding processor 120 may also now understand the entirety of the user's original primary speech and commence with the controlling of the electronic device to initiate a calling of John Smith.

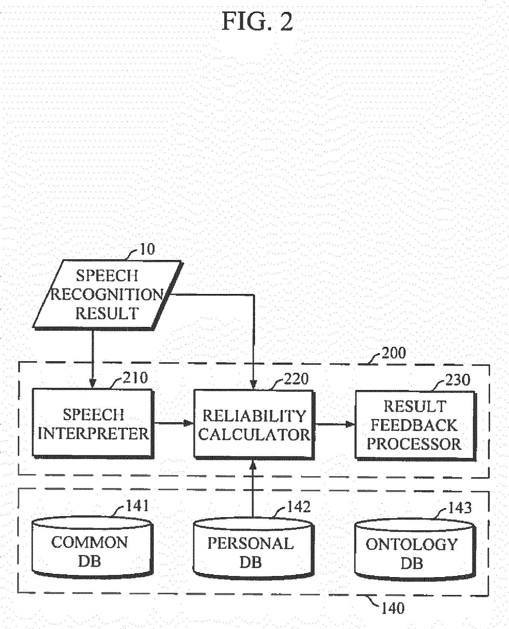

FIG. 2 is a block diagram illustrating a speech understanding processor according to one or more embodiments.

The speech understanding processor 200 and the personalized DB 140 of FIG. 2 may correspond to the speech processor 120 and the personalized DB 140 of FIG. 1, though embodiments are not limited thereto. The speech understanding processor may include a speech interpreter 210, a reliability calculator 220, and a result feedback processor 230, for example.

The speech interpreter 210 interprets a user's primary speech. The primary speech may be input after being converted into text through speech recognition. For example, the recognition may include various speech recognition methods, such as through use of either or a combination of an acoustic model, e.g., for phonetics or pronunciation, and a language model, e.g., for connectivity between words or phrases, as only examples. In addition to such models indicating a more or most likely recognition for an input audible speech, the models may also respectively indicate probabilities or scores for their respective potential phonetic or word recognitions. The speech interpreter 210 may analyze the primary speech in text form through named entity recognition (NER) and/or parsing, whereby grammatical construction or phrases of each sentence is analyzed, noting that embodiments are not limited to such analysis methods.

In addition, the speech interpreter 210 may deconstruct the primary speech into one or more units of expression by interpreting the primary speech. The units of expression refer to expressions that are divided from the user's utterance based on a designated unit. The designated unit may be, but not limited to, a word, for example, and the unit may be predetermined as phonemes, syllables, a phrase, a sentence, or the like. For example, if the user's primary speech were "Call Director Smith", the speech interpreter 210 may deconstruct the speech into two units of expression, "Call" and "Director Smith."

The reliability calculator 220 may further calculate the reliability of each unit of expression deconstructed by the speech interpreter 210. The reliability calculator 220 may implement various methods, such as syntax analysis/semantic analysis and word embedding used in natural language processing, depending on embodiment, to calculate the reliability of each unit of expression.

In an example, the reliability calculator 220 may use a language model score obtained from the speech recognition operation and the personalized DB 140 to calculate the reliability of each unit of expression. In this case, the personalized DB 140 may include at least one of the following: a common DB 141, a personal DB 142, and an ontology DB 143, as shown in FIG. 2. Here, the common DB 141 may store common speech expressions among multiple users, and the personal DB 142 may store various expressions in each user's idiolect. The personal DB 142 may store user's contacts and phonebook, as only examples, managed by a device which is, or is equipped with, the utterance processing apparatus 100, as well as a list of applications installed in the device, noting that aspects of the present disclosure are not limited thereto. The ontology DB 143 may store various speech expressions in the form of ontology.

In one example, the reliability calculator 220 may simultaneously use two or more DBs out of the common DB 141, the personal DB 142, and the ontology DB 143 to calculate the reliability of each unit of expression.

For example, when the reliability calculator 220 uses the common DB 141 and the personal DB 142, a greater weight may be assigned to results from the personal DB 142 than results from the common DB 141, so that each user's idiolect is given a higher emphasis or reliability score than the common expression.

The result feedback processor 230 compares the calculated reliability of each unit of expression of the primary speech with a predesignated threshold, for example, and depending on results of the comparisons, the result feedback processor 230 may output the result of understood speech, e.g., a response to the primary speech, or the additional-query processor 130 may process an additional query. For example, if a primary speech requests a certain person be called, and the primary speech is understood, the result feedback processor 230 may implement the calling of the certain person, while if the primary speech was a request for information from the agent, then the result feedback processor 230 may respond to the user with a response to the request for information. In an embodiment, the result feedback processor 230 may repeat the understood primary speech back to the user, e.g., either in a same form or through an alternate phrasing, and request confirmation of the speech understanding processor's understanding of the primary speech.

Thus, the result feedback processor 230 may determine that the primary speech has been understood when the calculated reliabilities of all units of expression that make up the primary speech are greater than the example predesignated threshold, and may then output the results of the understanding. Here, depending on embodiment, the result feedback processor 230 may output the result of the understanding to the user, or provide results of the understanding to another hardware element, application, or device for further processing or actions. In another example, even when the primary speech has one or more expressions whose reliabilities are smaller than the predesignated threshold, it may be determined that the entire primary speech has been understood, as long as a result (e.g., the average) of statistics for the total reliabilities of all expressions of the speech is greater than a predesignated threshold. However, aspects of the present disclosure are not limited thereto, such that the need or desire for an additional query may be determined according to various criteria.

For example, if "Director Smith" from the user's primary speech is initially understood as "John Smith" based on the personalized DB 142 and the calculated reliability of the expression "Director Smith" is greater than a predesignated threshold, the result feedback processor 230 may automatically relay, or operate on, the result of understanding the primary speech "Call Director Smith" as "Call John Smith" in consideration of the user's idiolect.

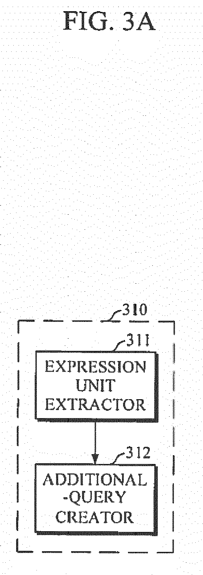

FIGS. 3A to 3C are block diagrams illustrating examples of additional-query processors according to one or more embodiments. The additional-query processors of FIGS. 3A to 3C may each correspond to the additional-query processor 130 of FIG. 1, though embodiments are not limited to the same. For example, the additional-query processors of FIGS. 3A-3C may operate when a speech understanding processor, such as any of the speech understanding processors 120 and 200 of FIGS. 1-2, determines that an additional query is required or desired.

Referring to FIG. 3A, the additional-query processor 310 may include an expression unit extractor 311 and an additional-query creator 312, for example.

In response to a determination made by the speech understanding processor that an additional query is required or desired for completely or sufficiently understanding a user's primary speech, the expression unit extractor 311 may extract the one or more units of expression, e.g., from all units of expressions that make up the primary speech, that are not fully understood or not found in the available databases and which may require or desire an additional query to clarify the primary speech. In this case, when such a speech understanding processor calculates the reliability, for example, of each unit of expression of the standard speech, the expression unit extractor 311 may extract such one or more units of expression that require or desire respective additional queries based on the calculated reliabilities.

If there are a number of units of expression whose calculated reliability is smaller than a set threshold, the expression unit extractor 311 may extract all of such units of expression with the smaller reliabilities and an additional query may be derived for the extracted units of expression. If multiple additional queries are desired for different related units of expression, from all units of expression of the primary speech, such as when the user's primary speech utterance is complex, then the respective multiple additional queries may be derived. Predefined criteria for respective extractions may vary and are not limited to the above example.

For example, in the case where a user's utterance "Mark in my calendar an appointment with my friend at location 1 for tomorrow at 3 o'clock" is input, if the reliability of the "location 1" expression is lower than a threshold, e.g., since the information regarding "location 1" is not present in both the personal DB 142 and the common DB 141 or the information is present only in the common DB 141, the expression unit extractor 311 may extract the "location 1" expression as the unit of expression for which an additional query needs to be made.

The additional-query creator 312 may generate an additional query associated with the extracted unit of expression. For example, in the above example where "location 1" is extracted, the additional-query creator 312 may generate an additional query "what is location 1?" by combining an additional-query template, for example, "what is" with the extracted unit of expression "location 1".

In another example in which the reliability of "location 1" is low since a certain idiolect related to "location 1" is not present in the personal DB 142, but the common DB 141 has "Chermside" registered as "location 1," the additional-query creator 312 generates an additional query "Is 'location 1' Chermside?" by combining an additional-query template "Is ...?" with the data stored in the common DB 141.

The additional-query creator 312 may convert the additional query generated as text into a natural language voice query using text-to-speech (TTS) technology and audibly output the additional query to the user.

As described above, based on the additional query made to the user regarding the unit of expression that the utterance processing apparatus could not understand among the primary speech, the user can easily identify which part of his/her speech the utterance processing apparatus was not able to understand, and thus may respond with clarifying information, such as, by responding "Location 1 is South Bank."

In contrast, as noted above, when a typical voice agent, implemented through computing or processing technologies, cannot understand a portion of what the user has said, the typical voice agent requests that the user repeat or rephrase the entirety of what the user said by outputting a voiced, for example, "Please say it again". The typical voice agent cannot understand the first utterance and, thus, will merely newly attempt to understand the user's subsequent complete rephrasing of the original utterance. Thus, because the user may not be able to identify which part of his/her speech the voice agent could not understand, the user may thus be unable to know which portion of the original utterance to change or alternatively say in the rephrasing of the original utterance. For example, if the typical voice agent did not understand a spoken "location 1" in the original utterance, the user will not know to differently refer to location 1 with alternative location identifying information and may keep inputting irrelevant and non-understandable information.

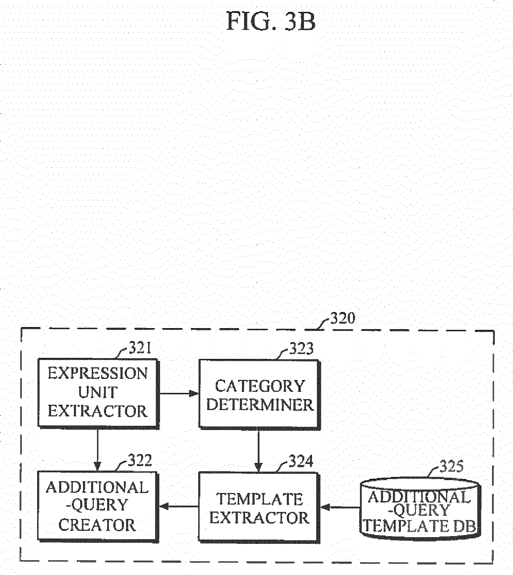

Referring to FIG. 3B an additional-query processor 320 may include an expression unit extractor 321, a category determiner 323, a template extractor 324, and an additional-query template DB 325, for example.

When the expression unit extractor 321 extracts the unit of expression, for which an additional query needs or is desirable to be made, the category determiner 323 may determine a category of the extracted unit of expression. In this case, the category determiner 323 may determine the category by referencing other understood units of expression that make up the user's primary speech.

For example, in the case where the user's primary speech is "Please, mark in my calendar an appointment with my friend at location 1 for tomorrow at 3 o'clock," and "location 1" is extracted as the unit of expression for which a clarifying additional query needs or is desired to be made, the category determiner 323 may infer that "location 1" is pertaining to a location based on other units of expression in the primary speech, such as the expressions "3 o'clock," "an appointment," and "at (location)," and then the category determiner 323 may categorize "location 1" as being a location. As only an example, the category determiner 323 may consider a predetermined number of expressions before and/or after the extracted expression that needs clarification, as well as previous utterances.

When the category determiner 323 determines the category of the extracted unit of expression that needs clarification, the template extractor 324 may extract a template that corresponds to the determined category from the additional-query template DB 335.

For example, if the "location 1" expression has been categorized as being a location, the template extractor 324 may extract an appropriate template related or corresponding to locations, such as "where is..?," from the additional-query template DB 335. Similarly, if the category of the extracted unit of express needing clarification is of/for an "object," the additional-query template "what is...?" may be extracted by the template extractor 324; and if the category of the extracted unit of express needing clarification is of/for a "person," the additional query terminal "who is...?" may be extracted by the template extractor 324.

Accordingly, when the unit of expression and the relevant additional-query template are extracted, the additional-query creator 322 may generate a corresponding additional query in a natural language dialog form by combining the unit of expression needing clarification and the appropriate template. For example, the additional-query creator 322 may generate an additional query, such as, "where is location 1?" by combining the unit of expression "location 1" and the additional-query template "where is..?" The additional-query creator 322 may convert the additional query in text form into a speech signal, and may audibly output the speech signal to the user through control of a voice agent. The voice agent may be a separate processing or other hardware element that is specifically configured to emulate or simulate a natural voice of an utterance processing apparatus, or terminal or device including the same that performs the recognizing of the primary speech and/or that responds to the user. Alternatively, the voice agent may be incorporated with one or more processors of the utterance processing apparatus, terminal, or device to generate either the voice signal or generate and amplify the voice signal for output by a speaker of the utterance processing apparatus, terminal, or device, as only examples.

For example, the additional-query creator 322 may convert the generated additional query in text form into the speech signal using information on predesignated phonetic variations of a voice to be output. The information regarding the phonetic variations of the voice to be output may include the speaker's sex (male/female), age, amplitude of speech, speech tempo, spoken language, etc. The voice agent may use this information to generate the corresponding natural voice.

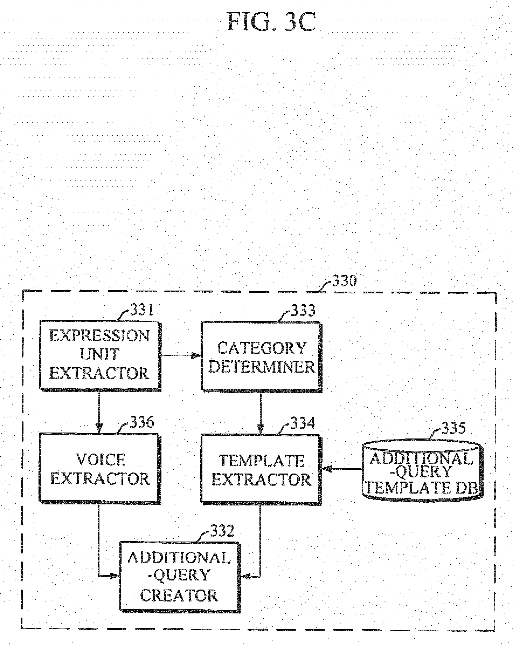

Referring to FIG. 3C, the additional-query processor 330 may include an expression unit extractor 331, an additional-query creator 332, a category determiner 333, a template extractor 334, an additional-query template DB 335, and a voice extractor 336, for example.

In the course of speech recognition of a user's utterance, a speech recognizer may not be able to recognize a word that has not been defined by a language model, and an understanding operation may result in an additional query being generated to clarify that word. In this case, the user may want to hear the part of his/her own utterance that the speech recognizer failed to recognize.

During the understanding operation, the expression unit extractor 331 may extract a unit of expression for which an additional query needs or is desired to be made, when the unit of expression failed to be recognized using the user's idiolect or when the unit of expression is not present in the personalized DB 140.

The category determiner 333 may determine a category of the extracted unit of expression, as described above, and the template extractor 334 may extract an additional-query template for the determined category from the additional-query template DB 335. In this case, the additional-query template DB 335 may store additional-query templates in text form or voice form.

The voice extractor 336 may extract a user's actual voice that corresponds to the unit of expression, e.g., extracted from the user's primary speech.

The additional-query creator 332 may generate an additional query by mixing a voice of the extracted additional-query template with the extracted actual voice of the user. In this case, if the extracted template is in the form of text, the additional-query creator 332 may convert the extracted template into a voice signal, and then mix the voice template with the user's actual voice.

In another example, the category determiner 333 and the template extractor 334 may not be included in the additional-query processor configured according to FIG. 3C. In this case, the corresponding additional-query creator 332 of such an additional-query processor may use a predefined voice template, which may be a simple speech signal, such as "What is it?" to generate the additional query.

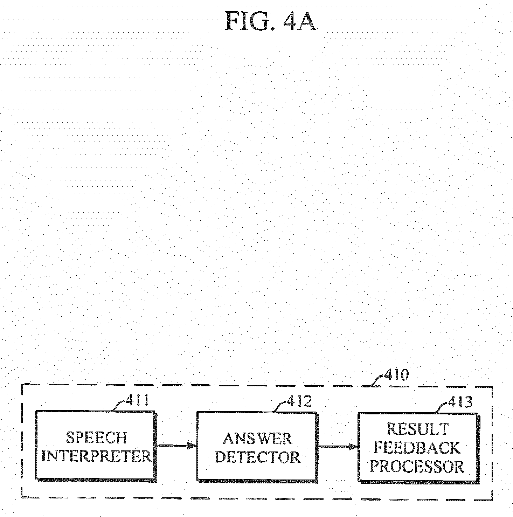

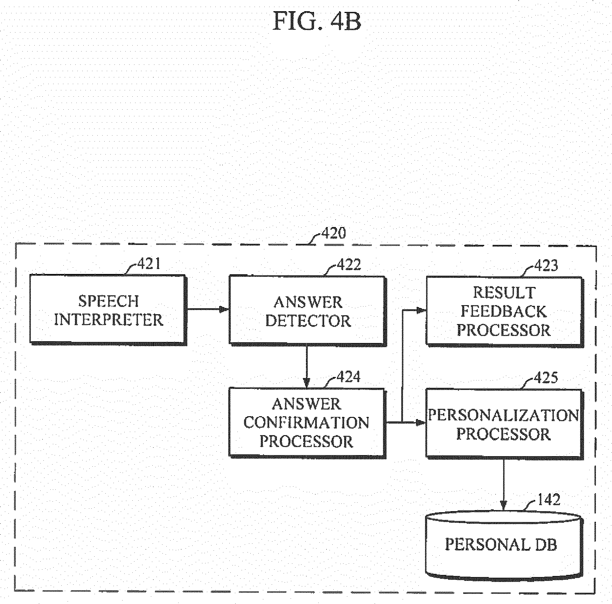

FIGS. 4A and 4B are block diagrams illustrating example additional-query processors according to one or more embodiments. The additional-query processors of FIGS. 4A and 4B may correspond to the additional-query processor 130 of FIG. 1, though embodiments are not limited to the same. For example, the additional-query processors of FIGS. 4A and 4B may respectively process a received additional speech of a user in response to an additional query to the user regarding a user's primary speech, such as generated by any of the additional-query processors of FIGS. 1 and 3A-3C. Here, the additional-query processors of FIGS. 4A and 4B may be further respectively configured as discussed above with regard to any or any combination of the additional-query processors of FIGS. 3A-3C or in combination with any of the same, or an utterance processing apparatus embodiment may be configured to separately include such additional-query processors of FIGS. 4A-4B and any of the additional-query processors of 3A-3C, again noting that alternative embodiments and configurations are also available.

Referring to FIG. 4A, an additional-query processor 410 may include a speech interpreter 411, an answer detector 412, and a result feedback processor 413, for example.

When a speech determiner, such as the speech determiner 110 of FIG. 1, as only an example, determines that a received utterance of a user is in response to an additional query by the utterance processing apparatus, the speech interpreter 411 interprets the additional speech.

Such a speech determiner and the speech interpreter 411 may be separately disposed based on their functionality, but depending on embodiment, they may also be integrated in a same device or configuration, whereby the speech determination by the speech determiner may occur simultaneously with, prior to, or after the speech interpretation by the speech interpreter 411.

The speech interpreter 411 may use syntax analysis/semantic analysis and/or NER technologies, for example, to interpret the user's additional speech and to deconstruct the additional speech into one or more units of expression.

The answer detector 412 may detect an answer from one or more of the deconstructed units of expression, using an interpretation of the additional query and the corresponding additional speech. For example, if the additional query was determined to be concerned with a location or place, the answer detector 412 may extract, as the answer, a unit of expression relating to a location or place from the additional speech. In addition, in the case where the user speaks a foreign language, such as the Korean language, the answer detector 412 may identify the final syllable, for example, of the additional speech from the deconstructed units of expression, and extract the unit of expression that immediately precedes the final ending as the answer.

When the answer to the additional query is extracted from the additional speech, the result feedback processor 413 may understand the additional speech of the user based on the previous understandings of the other expressions in the primary speech and the extracted answer, and output a resultant understanding of the primary speech based on the understanding of the previously unclear unit of expression that was clarified by the user's answer.

If no unit of expression that can be construed as being an answer is found in the user's additional speech, the result feedback processor 413 may present the previously generated additional query again to the user or initialize the dialog and reinitiate the dialog according to predesignated policies.

Referring to FIG. 4B, an additional-query processor 420 may include a speech interpreter 421, an answer detector 422, a result feedback processor 423, an answer confirmation processor 424, and a personalization processor 425, for example.

The speech interpreter 421, the answer detector 422, and the result feedback processor 423 may interpret the user's additional speech, detect an answer to an additional query presented by the utterance processing apparatus based on the result of the interpretation of the user's additional speech, and feed back a result based on the understanding of the additional speech in view of the detected answer.

In this case, the answer confirmation processor 424 may request that the user confirm whether the interpreted/understood answer detected by the answer detector 422 is correct. For example, in the case in which a detected answer related to the unit of expression "location 1" regarding the additional query is "South Bank", the answer confirmation processor 424 may generate a confirmation query, such as "Is location 1 South Bank?", and present the confirmation query to the user.

In addition, the answer confirmation processor 424 may receive a confirmation reply to the confirmation query from the user. In this case, the user may input a confirmation signal using a physical button, a touch button, or the like, which is mounted on the utterance processing apparatus 100, or may input a voice signal, such as "Yes/No." The user may use various methods, such as a gesture input, to input the confirmation reply.

If the user confirms that the understood answer is correct, the result feedback processor 423 may output a final result based on the utterance processing apparatus's understanding of the primary speech. Otherwise, the result feedback processor 423 may again present the same additional query, which was previously generated, or initialize and reinitiate the dialog. Alternatively, the additional query may be modified to use a different template, for example, and presented to the user again.

The personalization processor 425 may determine whether the current speaker is a new user or a registered user. If it is determined that the current speaker is a new user, the personalization processor 426 may perform a personalization process by requesting the user to input user information, and then receiving and registering the user information in the personal DB 142 or a new personal DB 142 for the particular user.

In addition, when it is confirmed by the user that the answer to the additional query is correct, the personalization processor 425 may perform a personalization process for said user by updating the personal DB 142 using both the unit of expression and the answer which are associated with the additional query. Thus, in such a non-limiting embodiment and only as an example, by confirming that the answer is understood properly the personalization processor 425 may be more confident in changing or updating the user's personal DB 142.

Thus, in this case, the personalization processor 425 may generate an entry in a form (e.g., a triple form of entity-relation-entity or a vector form using word/sentence embedding method) that can be stored in the personal DB 142 using the clarified unit of expression and/or the confirmed answer regarding the additional query. Then, the personalization processor 425 may store the generated entry in the personal DB 142. At this time, data architecture of the personal DB 142 may vary and is not limited to a specific one.

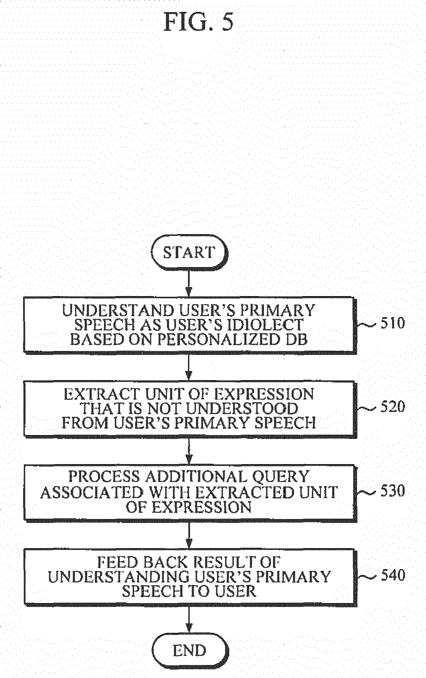

FIG. 5 is a flowchart illustrating an utterance processing method according to one or more embodiments.

Referring to FIG. 5, when a user's primary speech is input, an utterance processing apparatus, such as any or any combination of the non-limiting utterance processing apparatuses or corresponding elements or devices discussed herein, may understand the primary speech using a user's idiolect based on a personalized DB, as depicted in 510. At this time, the personalized DB may include a personal DB and a common DB, as only an example, wherein the personal DB stores various expressions in each user's idiolect and the common DB stores common speech expressions among multiple users. The personalized DB may also include an ontology DB. The utterance processing apparatus may use the personal DB that stores the users' idiolect as a dictionary so that it may understand the idiolect. Therefore, the user may set aliases, shortcut commands, or command combinations for a specific keywords or a frequently used functions so that they may be used during a dialog with the utterance processing apparatus.

Thereafter, if the utterance processing apparatus fails to understand the user's primary speech, the apparatus may extract a unit of expression for which an additional query needs or is desired to be made, as depicted in 520. For example, the utterance processing apparatus may extract a unit of expression that failed to be recognized in the course of speech recognition since the particular unit of expression was not already defined in a language model or since the unit of expression was recognizable otherwise but was determined to not be understood since the unit of expression was not found in the personal DB.

Then, in 530, the utterance processing apparatus may process an additional query regarding the extracted unit of expression for which clarification is desired. For example, the utterance processing apparatus may generate an additional query that contains the extracted unit of expression, less than the entire primary speech of the user, and request the user for a reply regarding the unit of expression that was not able to be understood, by presenting the generated additional query in voice form, for example, to the user. Also, in response to receiving such a reply to the additional query, the apparatus may detect for an answer from the reply regarding the unit of expression that the apparatus failed to understand, and then may be able to finally understand the user's primary speech using the detected answer. The apparatus may update the personalized DB so the apparatus may automatically understand the clarified expression in a next primary or additional speech by the user.

In an example, once the utterance processing apparatus understands the user's speech, e.g., the entirety of the primary speech, through the processing of the additional query, the apparatus may feed a result of the understanding, as discussed above, back to the user, as depicted in 540.

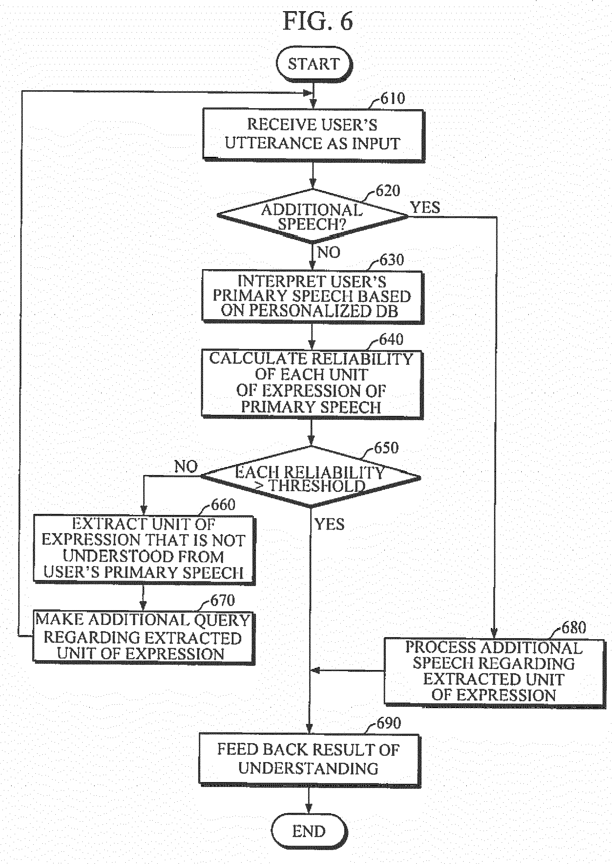

FIG. 6 is a flowchart illustrating an utterance processing method according to one or more embodiments.

Referring to FIG. 6, an utterance processing apparatus, such as any or any combination of the non-limiting utterance processing apparatuses or corresponding elements or devices discussed herein, receives a user's utterance as an input, as depicted in 610, and determines whether the utterance is a primary speech or an additional speech made in response to an additional query of the utterance processing apparatus, as depicted in 620. In this case, criteria for determining whether the user's utterance is an additional speech, for example, may vary. For example, it may be determined that an utterance that is input within a predetermined length of time after such an additional query was made is an additional speech.

Then, if it is determined in 620 that the user's utterance is a primary speech, the primary speech may be interpreted based on a personalized DB, as depicted in 630. As only an example, the personalized DB may be a database that includes any combination of one or more personal DBs, Common DBs, and Ontology DBs. In the interpreting of the user's utterance, various technologies, such as the syntax analysis/semantic analysis and/or NER, as only examples, may be used to interpret the user's speech.

In addition, the determination of whether the user's utterance is an additional speech, as depicted 620, and the interpretation of the user's speech, as depicted in 630, may be simultaneously carried out, or the additional speech determination may be made based on a result of the interpretation of the user's speech.

Thereafter, in 640, a reliability of each unit of expression that makes up the primary speech is calculated based on the result of interpretation, language model scores from the speech recognition, and the personalized DB. For example, in the case where the user's primary speech is "Mark in my calendar an appointment at location 1," if the language model score for the "location 1" unit expression is high but information regarding "location 1" is not found in the personalized DB for the particular user, the calculated reliability of the "location 1" expression may be very low.

At this time, with respect to each unit of expression, the utterance processing apparatus may assign different weights to the results of the respective language model scores, the common DB, and the personal DB; or adjust the assigned weights, such that a specific unit of expression can have a highest reliability result if a user's idiolect of the unit of expression exists in the personal DB.

In 650, the utterance processing apparatus compares the calculated reliability of each unit of expression with a threshold, for example, and if all of the reliabilities of units of expression are greater than the threshold, determines that the entirety of the user's primary speech has been understood. Then, in 690, for example, the utterance processing apparatus may feed the result of the understanding back to the user. For example, a corresponding command may be immediately implemented, the understood utterance may be repeated back to the user with a confirmation indication that the utterance was understood or with a confirmation query to confirm the full understanding, or some other reply may be made to a user's understood utterance based on the understanding of the user's utterance.

If one or more units of expression, each of which has a calculated reliability that is lower than the example threshold, are present in the primary speech, it may be determined that an additional query is needed or desired for clarification of the primary speech, as depicted in 650. As only an example, either all of such units of expression or one unit of expression with the lowest reliability may be extracted for which an additional query would need or desirably be made, as depicted in 660.

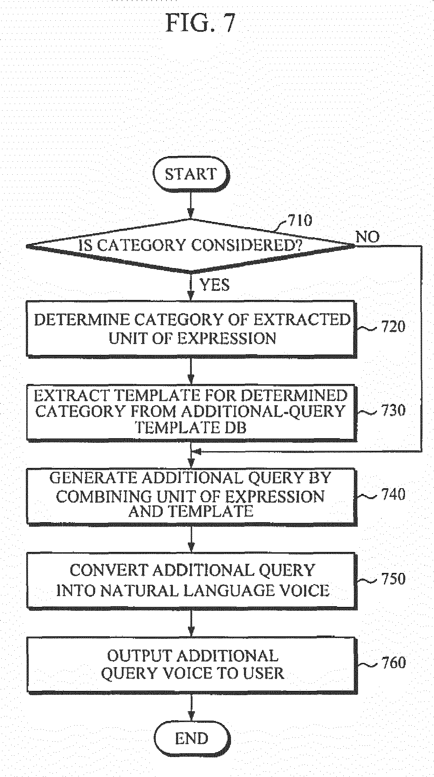

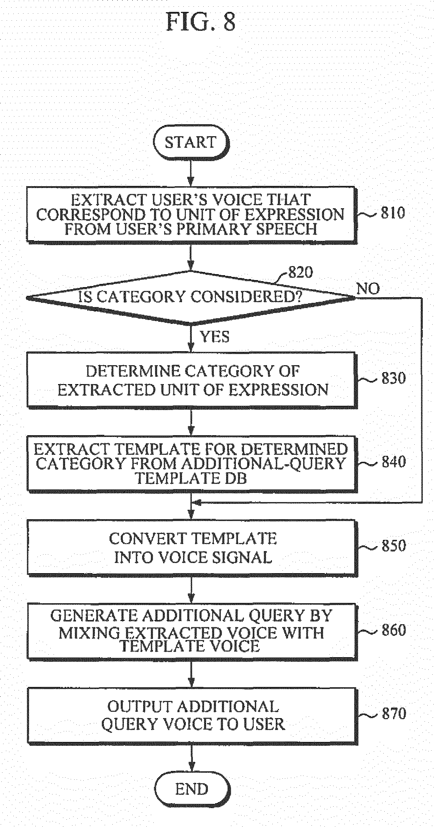

When the unit of expression for which the additional query would need or desired to be made, is extracted in 660, the additional query is generated using the extracted unit of expression and is presented to the user, as depicted in 670. Such generations of an additional query will be described in greater detail with reference to FIGS. 7 and 8.

When a user's utterance is input to the utterance processing apparatus in response to the additional query, as depicted in 610, the apparatus determines whether the input utterance is an additional speech, as depicted in 620.

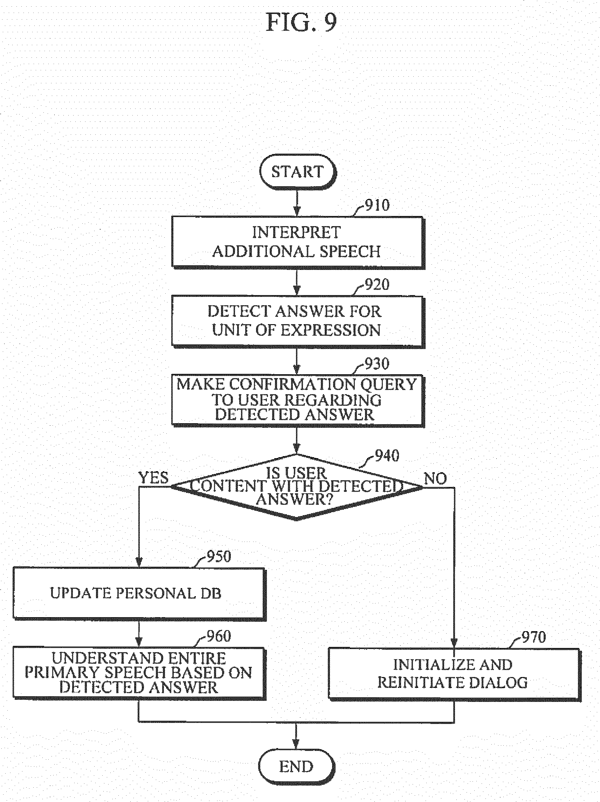

When it is determined that the user's utterance is the additional speech, the utterance processing apparatus processes the additional speech related to the extracted unit of expression that was desired to be clarified, and thereby understands the additional speech, as depicted in 680. Then, in an example, the utterance processing apparatus may feed a result of the understanding of the entire primary speech back to the user, as depicted in 690, which will be described in detail with reference to FIG. 9.

FIG. 7 is a flowchart illustrating an example of a generating of an additional query according to one or more embodiments. As only an example, the example generating of the additional query of FIG. 7 may correspond to operation 670 of FIG. 6, though embodiments are not limited thereto. In one or more embodiments, the generating of an additional query may be performed when a portion, for example, of a user's primary speech is not understood, such as by any or any combination of the non-limiting utterance processing apparatuses or corresponding elements or devices discussed herein.

When a unit of expression for which an additional query needs or is desired to be made is extracted, such as depicted in 660 of FIG. 6, the utterance processing apparatus may determine whether to make the additional query by taking into consideration a determined category, of plural available categories, of the extracted unit of expression, as depicted in 710. When available, a determination as to whether the category of extracted unit of expression should be considered in making the additional query may be predetermined at the time of manufacturing a device equipped with the apparatus, for example, or may be changed later by the user.

If it is determined that the category should be considered, the utterance processing apparatus may identify the category of the extracted unit of expression as, for example, one of a location, a person, a thing, or the like, e.g., by performing syntax analysis/semantic analysis on other units of expression near the extracted unit of expression or based on temporally related utterances or expressions, in 720.

Then, in 730, the utterance processing apparatus may extract, from an additional-query DB, a query template that corresponds to the identified category. For example, if the category is "person," the extracted template may be a sentence or a phrase, such as "Who is ..?", which asks about a person.

If it is determined in 710 that the category of the unit of expression should not be considered, one of a predesignated simple or general template, such as "What is ...?", may be used.

In 740, the additional query may be generated by combining the extracted unit of expression and the template.

In 750, the utterance processing apparatus, for example, converts the generated additional query into a natural language voice query, and outputs the voice query to the user, as depicted in 760. At this time, in an example, if the template is stored in the additional-query template DB in a voice form, only the extracted unit of expression may be converted into a voice and then the resulting voice is mixed with the voice template, thereby creating the combined natural language voice query.

FIG. 8 is a flowchart illustrating an example of a generating of an additional query according to one or more embodiments. As only an example, the example generating of the additional query of FIG. 8 may correspond to operation 670 of FIG. 6, though embodiments are not limited thereto. In one or more embodiments, the generating of an additional query may be performed using the actual voice of the user's utterance that is input, such as by any or any combination of the non-limiting utterance processing apparatuses or corresponding elements or devices discussed herein.

When the utterance processing apparatus fails to understand a voiced unit of expression because the unit of expression has not been recognized in the course of a performed speech recognition of the user's utterance or because the unit of expression is not present in a personalized DB, the apparatus extracts the unit of expression for which an additional query needs or is desired to be made, such as depicted in 660 of FIG. 6. As only an example, the personalized DB may be a database that includes any combination of one or more personal DBs, Common DBs, and Ontology DBs. Once the unit of expression is extracted, the utterance processing apparatus may extract, from the user's primary speech, an actual voice of the user associated with the extracted unit of expression for the additional query, as depicted in 810.

In addition, the utterance processing apparatus may determine whether to make an additional query by taking into consideration a determined category of the extracted unit of expression, as depicted in 820.

The order in which operation 810 and operation 820 are performed is not limited to what is shown in FIG. 8, as these operations may also be performed simultaneously or in a reversed order.

Then, if it is determined that the category of the extracted unit of expression should be considered in making the additional query, the utterance processing apparatus may identify the category of the extracted unit of expression as, for example, one of a location, a person, a thing, or the like, by performing syntax analysis/semantic analysis, for example, on other units of expression near said unit of expression or based on temporally related utterances or expressions, in 830.

Thereafter, in 840, the utterance processing apparatus may extract, from the additional-query DB, a query template that corresponds to the identified category. In this case, the additional-query template DB may store additional-query templates in text form and/or voice form.

If it is determined in 820 that the category should not be considered, one of a predesignated simple or general template, such as "What is ...?", may be used, where the simple or general template, e.g., to be used as a default template, may be extracted from the additional-query DB.

In 850, if the extracted template is a text template, the template may be converted into a voice signal using TTS, for example, as depicted in 850.

Then, the utterance processing apparatus may generate the additional query by mixing both an extracted actual voice of the user, e.g., from the primary speech and associated with the extracted unit of expression, with the converted voice template, as depicted in 860; the resulting combined voice query may then be presented to the user, as depicted in 870.

FIG. 9 is a flowchart illustrating an example of a processing of an additional speech according to one or more embodiments. As only an example, the example processing of the additional query of FIG. 9 may correspond to operation 680 of FIG. 6, though embodiments are not limited thereto. In one or more embodiments, the generating of an additional query may be performed to process a user's additional speech after making an additional query to the user, such as by any or any combination of the non-limiting utterance processing apparatuses or corresponding elements or devices discussed herein.

The utterance processing apparatus may interpret input voiced additional speech of the user, as depicted in 910, and detect from the additional speech an answer to the additional query made to the user regarding a unit of expression that the apparatus needed/desired clarification or failed to previously understand, as depicted in 920. At this time, when a result of a performed speech recognition of the user's additional speech is generated in text form, the utterance processing apparatus may interpret the additional speech using various text recognition technologies, such as parsing and NER.

Accordingly, in an example, when an answer to the additional query is detected in the additional speech, the apparatus may present a confirmation query to the user as to whether the detected answer is correct, and the apparatus may then receive, recognize, and interpret a user's reply to the confirmation query, as depicted in 930.

The confirmation query may be generated as a voice query and then presented to the user through a voice agent, which may also relay the user's reply to the confirmation query in voice form. However, the forms of confirmation query and corresponding reply are not limited to the above, such that a confirmation query in text form may be output to a display included in or of a device or terminal discussed herein and the user may input a confirmation reply in various ways, including voiced, textual, or through motion, for example.

Then, the utterance processing apparatus determines whether the user has indicated that the user is content with the detected answer based on the received confirmation reply, as depicted in 940. If the user is determined to be content with the detected answer, the apparatus may perform a personalization process to update the personalized DB with regard to the clarified unit of expression, as depicted in 950, and may understand the user's primary speech, as depicted in 960, which may include performing a corresponding command, retrieving corresponding information, or other operation consistent with the understood primary speech. If the user is not content with the detected answer, the utterance processing apparatus may present the previously generated additional query again to the user or may initialize and reinitiate the dialog, as depicted in 970.

In an example, the utterance processing apparatus also determines whether the user has been registered in the personal DB. If it is determined that the user is a registered user, and the user is content with the detected answer 940, the apparatus may perform the personalization process by updating the unit of expression for which the additional query was made and the answer regarding the unit of expression in the personal DB. If it is determined that the user is not a registered user, the apparatus may request that the user input user information and then register the user information in the personal DB, or in a generated or initialized other personal DB, and then perform the personalization process with respect to that personal DB.

For example, the utterance processing apparatus may generate an entry in a form (e.g., a triple form of entity-relation-entity or a vector form using word/sentence embedding method) that can be stored in the personal DB using the clarified unit of expression and/or the confirmed answer regarding the additional query. In this regard, the corresponding data architecture of the personal DB may vary and is not limited to a specific one.

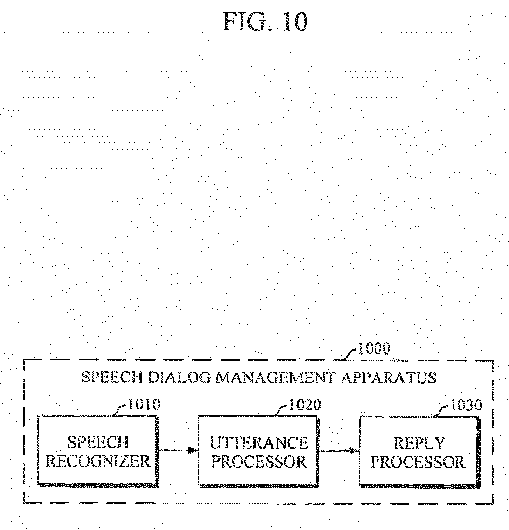

FIG. 10 is a block diagram illustrating a dialog management apparatus according to one or more embodiments.

The dialog management apparatus shown in FIG. 10 manages intelligent dialog. For example, the dialog management apparatus may be, or use, any or any combination of utterance processing apparatuses discussed herein, such as the utterance processing apparatus of FIG. 1 and the additional-query processors of FIGS. 3A-4B. Herein, a dialog management apparatus or method are respectively synonymous with an intelligent dialog management apparatus or method, both of which are respectively synonymous with a dialog processing apparatus or method or intelligent dialog processing apparatus or method. The dialog management apparatus 1000 may be, or be installed in, a device equipped with a voice agent or may be, or be installed in, both a device equipped with such a voice agent and a cloud server, and thus manage such intelligent dialog.

Referring to FIG. 10, the dialog management apparatus 1000 may include a speech recognizer 1010, an utterance processor 1020, and a reply processor 1030, for example.

The speech recognizer 1010 may convert a user's utterance relayed from the voice agent into text through a speech recognition operation, and output the text. For example, the text may be stored in a memory of the dialog management apparatus 1000 or provided directly to the utterance processor 1020. The speech recognizer 1010, or the voice agent, may store the user's utterance in the memory as well. The speech recognizer 1010 may be configured as an element of the voice agent, depending on embodiment.

The speech recognizer 1010 may recognize the speech using a previously built acoustic model and language model, and thus relay results of the recognition operation in text form, an acoustic model score, and a language model score to the utterance processor 1020.

The utterance processor 1020 may process the user's utterance in text form delivered from the speech recognizer 1010, or as obtained from the memory, and perform an understanding operation of the user's speech based on the user's personalized representation of speech.

The utterance processor 1020 may determine whether the delivered utterance of the user is a primary speech or an additional speech. If it is determined that the user's utterance is a primary speech, the utterance processor 1020 transforms units of expression, such as aliases and shortcut commands, into appropriate expressions personalized to the user, e.g., based on a personalized DB of the dialog management apparatus 1000, and delivers the transformed results to the reply processor 1030 or stores the same in the memory. As only an example, the personalized DB may be a database that includes any combination of one or more personal DBs, Common DBs, and Ontology DBs.

If the utterance processor 1020 fails to understand a specific unit of expression among the user's primary speech because the unit of expression is not present in the personalized DB, for example, the utterance processor 1020 may generate an additional query regarding the specific unit of expression and output the additional query in voiced form to the user through the voice agent.

In this case, that utterance processor 1020 may calculate a reliability of each unit of expression of the primary speech, determine whether an additional query is required or desired for each unit of expression based on the respective calculated reliabilities, and extract one or more units of expression for which respective additional queries may need or be desired to be made.

In an example, once an extracting is performed of a unit of expression that may need clarification, the utterance processor 1020 may determine a category of the extracted unit of expression using other units of expression in the primary speech; extract, from an additional-query template DB, an additional-query template that corresponds to the determined category; and then generate an additional query using the extracted additional-query template and the extracted unit of expression.

In an example, once an extracting is performed of a unit of expression that may need clarification, the utterance processor 1020 may extract the user's actual voice, e.g., from the stored primary speech, associated with the extracted unit of expression from the user's utterance, and generate an additional query by mixing the extracted actual voice of the user with the voice template.

In addition, when the utterance processor 1020 receives a speech recognition result for a user's additional speech from the speech recognizer 1010, the utterance processor 1020 may detect an answer to the additional query from the received speech recognition result, and perform a personalization process for the user by updating a personal DB for the user using the detected answer. Thus, with the clarification of the unit of expression, the utterance processor 1020 can understand the unit of expression and can fully understand the originally received primary speech of the user.

In an example, when a result of an understanding of the user's primary speech, after the understanding the of the unit of expression, is relayed from the utterance processor 1020 to the reply processor 1030, or after an alternate indication of the same by the utterance processor 1020, the reply processor 1030 may generate an appropriate reply to be provided to the user based on the personalized DB, for example, and present the generated reply to the user. At this time, in one or more embodiments, the reply processor 1030 may convert the generated reply into a natural language voice signal, and transmit the voice signal to the voice agent to output the reply to the user.

In this case, the reply processor 1030 may convert the reply into a natural language voice based on information regarding predesignated phonetic variations of a voice to be output. For example, the information regarding the phonetic variations of the voice to be output may include the speaker's sex (male/female), range, amplitude of speech, speech tempo, spoken language, and the like.

The reply processor 1030 may generate a query sentence or instruction to the personalized DB, for example, to search the personalized DB, such as by searching the common DB or the personal DB, for example, based on the understanding the primary speech, which is delivered in a logical form from the utterance processor 1020. Then, the reply processor 1030 may execute the query sentence and obtain necessary information from the personalized DB. The reply processor 1030 may generate one or more reply candidates using the obtained necessary information. In addition, the reply processor 1030 may perform a process of understanding and interpreting the generated reply candidates if needed, and generate a final reply to be presented to the user, using the interpretation result.

For example, if a user's utterance "Tell me Director Smith's phone number" is input as the primary speech, the utterance processor 1020 may understand the utterance, as "Tell me John Smith's phone number" based on a personal DB of the user. In an example, the utterance processor 1020 may feed a result of the understanding back to the user through the reply processor 1030. Based on the understanding of the utterance, the reply processor 1030 may search the user's personal DB, such as a user's phonebook, which is stored in a device, and find John Smith's phone number "+81-010-1234-5678" Then, the reply processor 1030 may generate a corresponding reply, for example, "John Smith's phone number is +81-010-1234-5678" and relay the reply to the voice agent to be output to the user.

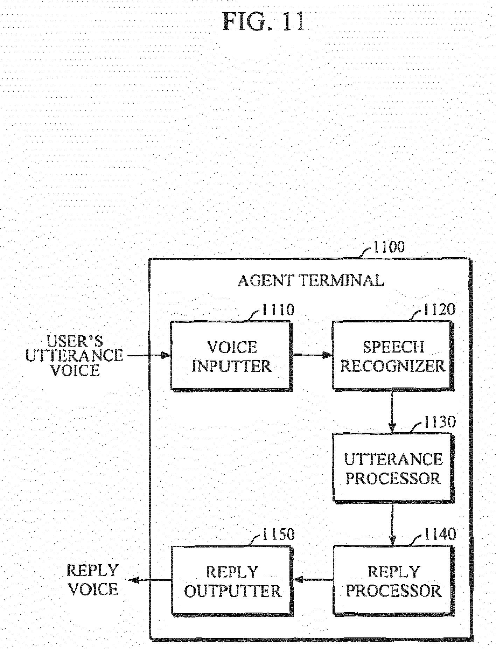

FIG. 11 is a block diagram illustrating an agent terminal, e.g., as being or being equipped with a dialog management apparatus, according one or more embodiments.

An agent terminal 1100 as shown in FIG. 11 may be a device equipped with a voice agent, and may be a smartphone, a tablet PC, a desktop PC, a laptop PC, a healthcare device, an intelligent robot, a wearable device, etc.

Referring to FIG. 11, and only as an example, the dialog management apparatus 1000 of FIG. 10 may be is equipped in the agent terminal 1100, such as represented by the speech recognizer 1120, the utterance processor 1130, and reply processor 1140, and may manage intelligent dialog between the voice agent and the user. Thus, as shown in FIG. 11, the agent terminal 1100 may include a voice inputter 1110, the speech recognizer 1120, the utterance processor 1130, the reply processor 1140, and a reply outputter 1150.

In this case, the voice inputter 1110 and the reply outputter 1150 may be hardware elements of the voice agent and may include a microphone and speaker, respectively, for example. In addition, as only an example and noting that alternative embodiments are available, the speech recognizer 1120, the utterance processor 1130, and the reply processor 1140 may correspond to the dialog management apparatus 100 of FIG. 1, so further detailed descriptions thereof will be omitted.

The voice inputter 1110 receives an utterance voice input by a user. For example, the speech inputter 1110 may receive the user's voice through a microphone embedded in the agent terminal. The voice inputter 1110 may convert a voice signal received from the user, for example, into a digital signal and relay the digital signal to the speech recognizer 1120 on an audio frame-by-frame basis, for example. The voice inputter 1110 may operate to detect and capture any other primary speech or additional speech discussed above, for example.

The speech recognizer 1120 may convert the user's utterance voice into text and deliver the utterance text to the utterance processor 1130.

The utterance processor 1130 may understand the user's utterance text, and make an additional query to a specific unit of expression that may need or desire clarification. In addition, the utterance processor 1130 relays an appropriate result of an understanding the user's utterance to the reply processor 1140 when the processor 1130 understands the user's entire speech. For example, if the user's request for a particular person's phone number is understood, the appropriate result provided by the reply processor 1140 may be information of that particular person's phone number. The reply processor 1140 may also initiate some other operation to be performed by the agent terminal 1100 if the user's speech was a command, such as a request to call a particular person.

Thus, the reply processor 1140 may generate a reply to the user based on the result of the understanding of the user's speech, convert the reply into a natural language voice, and then deliver the resulting voice reply to the reply outputter 1150.

The reply outputter 1150 may output the reply received from the reply processor 1140 to the user. The reply outputter 1150 (or the reply processor 1140) may operate to implement or control other operations or commands and/or output any of the other replies or queries to the user as discussed above, for example, such as through a voice agent.

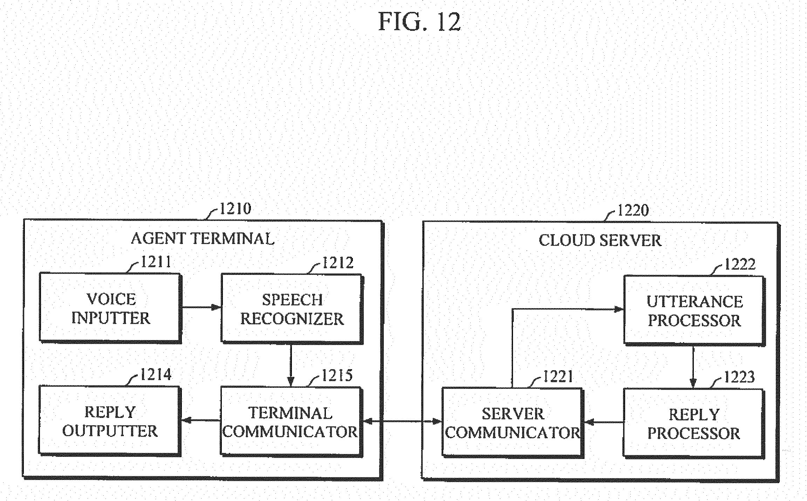

FIG. 12 is a block diagram illustrating a dialog management system according to one or more embodiments.

Referring to FIG. 12, elements of a dialog management system can be arranged in an agent terminal 1210 and a cloud server 1220 in a distributed manner. For example, the dialog management system of FIG. 10 may be arranged in the agent terminal 1210 and cloud server 1220 in a distributed manner.

For example, referring to FIG. 12, the dialog management system may include the agent terminal 1210 and the cloud server 1220. Alternatively, the dialog management system may include either of the agent terminal 1210 and the cloud server 1220. The voice inputter 1211, speech recognizer 1212, reply outputter 1214, utterance processor 1222, and reply processor 1223 may operate similarly to the voice inputter 1110, speech recognizer 1120, reply outputter 1150, utterance processor 1130, and reply processor 1140 of FIG. 11, for example, so that descriptions thereof will only be briefly made.

As illustrated, the agent terminal 1210 may include the voice inputter 1211 and the reply outputter 1214, as hardware elements of a voice agent, as well as the speech recognizer 1212 and a terminal communicator 1215.

The agent terminal 1210 may activate the microphone of the voice inputter 1211 in response to a user's request for dialog, or may automatically operate upon detection of a voiced speech by the voice inputter 1211. When a user's utterance voice signal is input, the voice inputter may convert the input voice signal into a digital signal, such as in audio data frames, and relay the digital signal to the speech recognizer 1212. The speech recognizer 1212 may produce a recognition result in text form by recognizing the user's utterance, and request the terminal communicator 1215 to transmit the produced recognition result to the cloud server 1220 that processes the utterance.

The terminal communicator 1215 may search for the cloud server 1210 in a communication network connected through a communication hardware module, request a communication connection with said cloud server 1210, and transmit the speech recognition result that contains the user's utterance in text form, a corresponding acoustic model score, and a corresponding language model score, e.g., from the speech recognizer 1212, to the cloud server 1220 when the communication connection is made. At this time, if the terminal communicator 1215 fails to find the cloud server 1220 in the current communication network, the terminal communicator 1215 may control another communication module to access another communication network and establish a communication with the cloud server 1220. Here, as only examples, the network communication may be a short-range wireless communication, such as WiFi, near field communication (NFC), ZigBee®, Bluetooth®, and the like; or mobile communication, such as 3G, 4G, and 5G long term evolution (LTE) communication; but aspects of the present disclosure are not limited thereto. In addition, the agent terminal 1210 may be equipped with one or more communication hardware modules that are configured to implement such communication protocols. The terminal communicator 1215 may then listen or wait for a response from the cloud server 1210.

When the terminal communicator 1215 receives a reply regarding the user's utterance from the server communicator 1221, which may include information indicating what relevant command was represented by the user's utterance so the reply outputter 1214 may execute a relevant operation based on the received information and/or which may include a particular reply generated by the cloud server for output by the reply outputter 1214 to the user.

The server communicator 1221 of the cloud server 1220 receives a speech recognition result from the terminal communicator 1215, for example, and relays the speech recognition result to the utterance processor 1222. At this time, when receiving the speech recognition result, the utterance processor 1222 performs an understanding operation for the user's utterance using the personalized DB, as described above, and relays a result of the understanding operation to the reply processor 1223. For example, the reply processor 1223 may generate a reply to be presented to the user based on the result of understanding operation, and control the server communicator 1221 to relay the generated reply to the terminal communicator 1215 of the agent terminal 1210. The generated reply may be an additional query, a confirmation query, or other reply consistent with the results of the understanding operation.

The utterance processing techniques and dialog techniques according to one or more disclosed embodiments are not limited to the above, and may be modified in various ways. For example, a modification may be made such that all components of a dialog management apparatus, e.g., including a speech processor, utterance processor, and reply processor, are mounted in one or more cloud servers to process a request from an agent terminal. As another example, an agent terminal and cloud server may both include such a dialog management apparatus, and the agent terminal may selectively use either of the agent terminal or the cloud server to perform any or any combination of a corresponding speech recognition, utterance processing, and reply processing for a user's utterance.

As only examples, in one or more embodiments, a speech-based intelligent dialog implementation may provide dialog management that is capable of building sematic connections between words or phrases of a speaker and that may request selective clarification of unrecognized portion(s) of a spoken phrase. One or more speech-based intelligent dialog method and agent embodiments discussed herein may thereby, as well as or alternatively through additional and/or alternative aspects, provide more efficient, accurate, and/or operable automated interaction with user's attempting to interact with such intelligent dialog agents and thus improve on computing technologies and solve one or more problems specific to such computing technologies implementing automated dialog agents.

The speech determiner 110, speech understanding processor 120, additional-query processor 130, personalized database 140, speech interpreter 210, reliability calculator 220, result feedback processor 230, expression unit extractor 311, additional-query creator 312, expression unit extractor 321, additional-query creator 322, category determiner 323, template extractor 324, additional-query template DB 325, expression unit extractor 331, additional-query creator 332, category determiner 333, template extractor 334, additional-query template DB 335, voice extractor 336, speech interpreter 411, answer detector 412, result feedback processor 413, speech interpreter 421, answer detector 422 result feedback processor 423, answer confirmation processor 424, personalization processor 425, speech recognizer 1010, utterance processor 1020, reply processor 1030, voice inputter 1110, speech recognizer 1120, utterance processor 1130, reply processor 1140, reply outputter 1150, voice inputter 1211, speech recognizer 1212, reply outputter 1214, terminal communicator 1215, server communicator 1221, utterance processor 1222, and reply processor 1223 in FIGS. 1-4B and 10-12 that perform the operations described in this application are implemented by hardware components configured to perform the operations described in this application that are performed by the hardware components. Examples of hardware components that may be used to perform the operations described in this application where appropriate include controllers, sensors, speakers, generators, drivers, memories, comparators, arithmetic logic units, adders, subtractors, multipliers, dividers, integrators, antennas, wired or wireless communication interfaces, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 5-9 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims.

## Claims

1. An intelligent dialog processing apparatus, the apparatus comprising:
a speech understanding processor, of one or more processors, configured to perform an understanding of an uttered primary speech of a user using an idiolect of the user based on a personalized database, DB, for the user; and
an additional-query processor, of the one or more processors, configured to extract, from the primary speech, a select unit of expression that is not understood by the speech understanding processor, and to provide a clarifying query for the user that is associated with the extracted unit of expression to clarify the extracted unit of expression.

2. The apparatus of claim 1, wherein the speech understanding processor comprises a reliability calculator configured to calculate a reliability of each unit of expression that makes up the primary speech, using the personalized DB, and
the speech understanding processor performs the understanding of the primary speech using the idiolect of the user based on the calculated reliability, and
wherein the providing of the clarifying query includes analyzing a context of the extracted unit of expression in the primary speech and/or the personalized DB for a potentially related term for the extracted unit of expression and generating a contextualized clarifying query based on a result of the analyzing, or
wherein the personalized DB comprises at least one of the following:
a common DB storing common speech expressions among multiple users;
a personal DB storing various expressions in the idiolect of the user; and
an ontology DB storing either or both the common speech expressions and the expressions in the idiolect of the user in an ontology form,
wherein the reliability calculator differently weights understanding results from at least two DBs out of the common DB, the personal DB, and the ontology DB, and then calculates the reliability using the differently weighted understanding results.

3. The apparatus of claim 1 or 2, wherein the additional-query processor generates the clarifying query based on either or both the extracted unit of expression and a query template, and
wherein the additional-query processor comprises a category determiner configured to determine a category of the extracted unit of expression, and a template extractor configured to extract the query template that corresponds to the determined category from a query template DB, or
wherein the additional-query processor further comprises a voice extractor configured to extract, from audio of the primary speech, audio of the user's voice that corresponds to the extracted unit of expression, and
the additional-query creator generates the clarifying query by mixing the extracted audio of the user's voice with a generated voicing of the query template.

4. The apparatus of one of claims 1 to 3, wherein the additional-query processor is further configured to interpret a clarifying speech which is received from the user in response to an outputting of the provided clarifying query to the user, and the additional-query processor further comprises an answer detector configured to detect an answer related to the extracted unit of expression in the clarifying speech based on a result of the interpretation of the clarifying speech,and
wherein the additional-query processor comprises an answer confirmation processor configured to make a confirmation query to the user regarding the detected answer, and an answer personalization processor configured to update the personalized DB according to a confirmation reply received from the user in response to the confirmation query, or further comprising a speech determiner configured to determine which of primary and clarifying speeches is intended by an input utterance of the user.

5. The apparatus of one of claims 1 to 4, wherein one of the one or more processors is configured to receive an utterance of the user captured by a voice inputter, to perform recognition of the received utterance, and to provide results of the recognition to the speech understanding processor to perform the understanding based on the provided results,
further comprising a reply processor, of the one or more processors, configured to provide the clarifying query to the user in a natural language voice.

6. An intelligent dialog processing method, the method comprising:
performing an automated understanding of an uttered primary speech of a user using an idiolect of the user based on a personalized DB for the user;
extracting, from the primary speech, a select unit of expression that is not understood based on the understanding; and
providing a clarifying query associated, through an automated process, with the extracted unit of expression to clarify the extracted unit of expression.

7. The method of claim 6, wherein the understanding of the uttered primary speech comprises calculating a reliability of each unit of expression that makes up the primary speech, based on the personalized DB, and performing the understanding of the primary speech using the idiolect of the user based on the calculated reliability, and
wherein the personalized DB comprises at least one of the following:
a common DB storing common speech expressions among multiple users;
a personal DB storing various expressions in the idiolect of the user; and
an ontology DB storing either or both the common speech expressions and the expressions in the idiolect of the user in an ontology form.

8. The method of claim 6 or 7, wherein the providing of the clarifying query comprises generating the clarifying query, for output to the user, based on either or both the extracted unit of expression and a query template, and
wherein the providing of the clarifying query comprises determining a category of the extracted unit of expression, and extracting the query template that corresponds to the determined category from a query template DB, or wherein the providing of the clarifying query comprises extracting, from audio of the primary speech, audio of the user's voice that corresponds to the extracted unit of expression, generating the clarifying query by mixing the extracted audio of the user's voice with a generated voicing of the query template, and outputting the generated clarifying query.

9. The method of one of claims 6 to 8, wherein the providing of the clarifying query comprises interpreting a clarifying speech which is received from the user in response to an outputting of the provided clarifying query to the user, and detecting an answer related to the extracted unit of expression in the clarifying speech based on a result of the interpretation of the clarifying speech, and
wherein the providing of the clarifying query comprises generating a confirmation query regarding the detected answer, presenting the generated confirmation query to the user, and updating the personalized DB according to a confirmation reply received from the user in response to the confirmation query, or further comprising:
determining which of primary and clarifying speeches is intended by an input utterance of the user.

10. The method of one of claims 6 to 9,
wherein the performing of the understanding of the uttered primary speech further comprises receiving the uttered primary speech from a remote terminal that captured the uttered primary speech, and
wherein the providing of the clarifying query comprises providing the clarifying query to the remote terminal to output the clarifying query to the user, and
wherein the received uttered primary speech is in a text form as having been recognized by a recognizer processor of the remote terminal using at least one of an acoustic model and a language model to recognize the captured uttered primary speech.

11. The method of one of claims 6 to 10, further comprising:
receiving an utterance of the user captured by a voice inputter;
performing recognition on the received utterance, where the performing of the understanding includes performing the understanding using results of the recognition; and
outputting the clarifying query to the user, as a reply to the utterance, in a natural language voice.

12. An intelligent dialog processing system comprising:
a speech recognizer processor, of one or more processors, configured to receive an initial utterance of a statement by the user, and to perform a recognition of the received initial utterance;
an utterance processor, of the one or more processors, configured to perform an understanding of the recognized initial utterance using an idiolect of the user based on results of the recognition and a personalized DB of the user, process a clarifying query associated with a unit of expression that is not understood in the understanding of the recognized initial utterance, and to output the clarifying query; and
a reply processor, of the one or more processors, configured to generate a natural language reply to the received initial utterance of the user using the clarifying query for clarify a portion of the initial utterance to the utterance processor

13. The system of claim 12, wherein the speech recognizer processor recognizes the received initial utterance using either or both an acoustic model and a language model, and provides the results of the recognition to the utterance processor in a text form.

14. The system of claims 12 or 13, wherein the utterance processor determines a category of the unit of expression, and generates the clarifying query by combining the unit of expression and a query template that corresponds to the determined category, and
wherein the utterance processor extracts, from audio of the initial utterance, audio of the user's voice that corresponds to the unit of expression, and generates the clarifying query by mixing the extracted audio of the user's voice with a generated voicing of the query template, or wherein, when a clarifying speech is received in response to the clarifying query, the utterance processor detects an answer related to the unit of expression from the clarifying speech and provides a final result of an understanding of the initial utterance based on both the detected answer and the performed understanding of the initial utterance.

15. The system of one of claims 12 to 14, wherein the reply processor extracts a reply candidate from the personalized DB based on results of the understanding of the initial utterance, generates a natural language question using the extracted reply candidate, converts the generated question into a natural language voice, and provides the natural language voice for output to the user.
